# EUROPEAN PATENT APPLICATION

(11) **EP 4 800 494 A1**
(43) Date of publication of application: **02.09.2026**
(21) Application number: 26159482.4
(22) Date of filing: 19.02.2026
(51) Int. Cl.: G05B 17/02

(54) **SYSTEMS AND METHODS FOR CONTROLLING EQUIPMENT WITH A VALIDATED MODEL AND A LARGE LANGUAGE MODEL**

(30) Priority: 27.02.2025 US 202519065742
(71) Applicant: Rockwell Automation Technologies, Inc., Mayfield Heights, OH 44124 (US)
(72) Inventor: SayyarRodsari, Bijan, Mayfield Heights, OH, 44124 (US); Dai, Wei, Mayfield Heights, OH, 44124 (US); Ye, Zeyang, Mayfield Heights, OH, 44124 (US); Reynolds, Jordan, Mayfield Heights, OH, 44124 (US)
(74) Representative: Grünecker Patent- und Rechtsanwälte PartG mbB

(57) **Abstract**

Described systems and methods may enable control of equipment using a response generated by an LLM and a model for the equipment. The techniques may include receiving a prompt related to an operation of an industrial automation equipment. The techniques may also include providing the prompt as an input to a Large Language Model (LLM) that stores information related to the industrial automation equipment. Further, the techniques include retrieving identifier information as an output of the LLM. Further still, the techniques include determining that a process parameter related to the operation of the industrial automation equipment is accessible by the computing system based on the identifier information. Further still, the techniques include obtaining a model for the operation based on the process parameter being accessible, generating a response to the prompt based on the model, controlling the industrial automation equipment based on the response.

## Description

### BACKGROUND

The present disclosure generally relates to process control for industrial automation devices. More specifically, the present disclosure relates to controlling industrial automation devices using a Large Language Model (LLM).

LLMs may offer potential benefits for a variety of industries. For example, LLMs may provide a user with a natural interface to interact with computing systems to generate a response that answers a user's request for information, provide insights on potential improvements, suggest new ideas, and so on. However, the LLMs are probabilistic prediction engines. As such, the LLMs may provide a response with incorrect or otherwise inaccurate information. Accordingly, it may be advantageous to develop techniques that ensure the accuracy and reliability of LLMs and generative AI.

This section is intended to introduce the reader to aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

These and other features, aspects, and advantages of the present embodiments will become better understood when the following detailed description is read with reference to the accompanying drawings in which like characters represent like parts throughout the drawings, wherein:
FIG. 1 illustrates an example industrial automation system employed by a food manufacturer, in accordance with an embodiment;
FIG. 2 illustrates a diagrammatical representation of an exemplary control and monitoring system that may be employed in any suitable industrial automation system, in accordance with an embodiment;
FIG. 3 illustrates example components that may be part of a control/monitoring device in a control system for the industrial automation system, in accordance with an embodiment;
FIG. 4 illustrates a flow chart of a method for controlling industrial automation equipment based on a prompt and an LLM, in accordance with an embodiment;
FIG. 5 illustrates a flow chart of a method for simulating a response, in accordance with an embodiment; and
FIG. 6 illustrates a flow chart of a method for validating a response using a model, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

As discussed above, LLMs may provide inaccurate or otherwise incorrect information. For example, LLMs can provide hallucinations, which refer to a response generated by the LLM that is an incorrect response, a fabricated response, or otherwise a response that is not based on validated information. In an industrial setting, a user may desire to use an LLM to determine how equipment works, how to repair equipment, or how to avoid undesirable operating conditions. An inaccurate response (e.g., a hallucination) from an LLM may cause equipment to operate in an undesirable way (e.g., operating outside of certain operation conditions). It is presently recognized that is may be desirable to develop techniques that verify the accuracy of the response from the LLM or otherwise provide a validated response.

With this is mind, the present disclosure relates to techniques for controlling operation of industrial automation equipment by utilizing an LLM in combination with a model to validate, modify, or otherwise verify a response from the LLM that relates to the operation of the industrial automation equipment. The techniques may include using an LLM that parses words or phrases in a prompt (e.g., a request for information, a command) to identify industrial automation equipment and an operation indicated by the prompt. The operation indicated in the prompt may relate to a desired operating condition for the equipment, an undesirable operating condition, or otherwise a request for information related to the industrial automation component. The LLM creates a search (e.g., a search prompt, a spoken language search prompt) based on the identified industrial automation equipment and operation that is used to retrieve information from a database that stores information for an industrial automation system or otherwise a system where the industrial automation equipment is deployed. The techniques further include determining identifier information (e.g., sensor information, layout information, equipment type information, product information) associated with the industrial automation equipment. The identifier information may be used to model the operation of the industrial automation equipment, which helps verify a spoken language response generated by the LLM based on the prompt. In this way, the disclosed techniques may improve the accuracy of response generated by LLMs and prevent LLMs from providing incorrect information.

In some embodiments the techniques include utilizing an artificial intelligence (AI) agent or other software entity in conjunction with the LLM. For example, the AI agent may perform tasks based on the outputs of the LLM. For example, the LLM may create a spoken language search prompt. The AI agent may obtain the spoken language search prompt and conducts the search (e.g., searches a database specific to a factory, industrial automation system, or a setting described herein) to identify whether the industrial automation equipment mentioned in the spoken language search prompt actually exist. Further, the AI agent may obtain identifier information based on the search prompt. As one specific non-limiting example, the AI agent may obtain a Process & Piping Diagram to identify all the instrumentation available for that unit. Further, AI agent may search a digital twin database to determine whether a validated digital twin model (e.g., a validated model) for the industrial automation equipment exists. If the AI agent determines that the digital twin model does not exist, it may return that information to the LLM (e.g., by generating a visualization, outputting an alert), and then LLM tasks another agent or software entity with building a data-driven model of the unit.

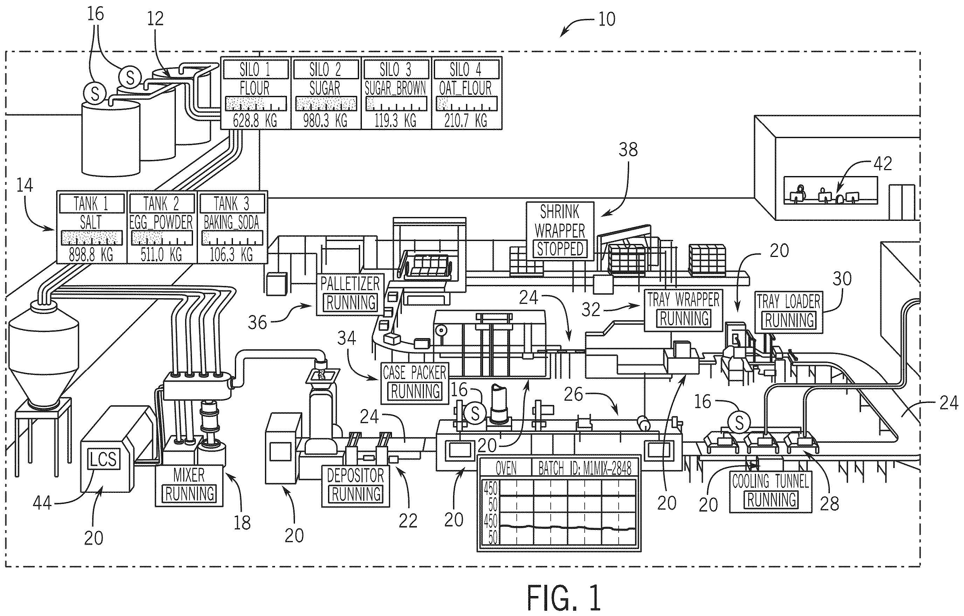

By way of introduction, FIG. 1 illustrates an example industrial automation system 10 employed by a food manufacturer. The present embodiments described herein may be implemented using the various devices illustrated in the industrial automation system 10 described below. However, it should be noted that although the example industrial automation system 10 of FIG. 1 is directed at a food manufacturer, the present embodiments described herein may be employed within any suitable industry, such as automotive, mining, hydrocarbon production, manufacturing, and the like. The following brief description of the example industrial automation system 10 employed by the food manufacturer is provided herein to help facilitate a more comprehensive understanding of how the embodiments described herein may be applied to industrial devices to significantly improve the operations of the respective industrial automation system. As such, the embodiments described herein should not be limited to be applied to the example depicted in FIG. 1.

Referring now to FIG. 1, the example industrial automation system 10 for a food manufacturer may include silos 12 and tanks 14. The silos 12 and the tanks 14 may store different types of raw material, such as grains, salt, yeast, sweeteners, flavoring agents, coloring agents, vitamins, minerals, and preservatives. In some embodiments, sensors 16 may be positioned within or around the silos 12, the tanks 14, or other suitable locations within the industrial automation system 10 to measure certain properties, such as temperature, mass, volume, pressure, humidity, and the like.

The raw materials may be provided to a mixer 18, which may mix the raw materials together according to a specified ratio. The mixer 18 and other machines in the industrial automation system 10 may employ certain industrial automation devices 20 to control the operations of the mixer 18 and other machines. The industrial automation devices 20 may include controllers, input/output (I/O) modules, motor control centers, motors, human machine interfaces (HMIs), operator interfaces, contactors, starters, sensors 16, actuators, conveyors, drives, relays, protection devices, switchgear, compressors, sensor, actuator, firewall, network switches (e.g., Ethernet switches, modular-managed, fixed-managed, service-router, industrial, unmanaged, etc.) and the like.

The mixer 18 may provide a mixed compound to a depositor 22, which may deposit a certain amount of the mixed compound onto conveyor 24. The depositor 22 may deposit the mixed compound on the conveyor 24 according to a shape and amount that may be specified to a control system for the depositor 22. The conveyor 24 may be any suitable conveyor system that transports items to various types of machinery across the industrial automation system 10. For example, the conveyor 24 may transport deposited material from the depositor 22 to an oven 26, which may bake the deposited material. The baked material may be transported to a cooling tunnel 28 to cool the baked material, such that the cooled material may be transported to a tray loader 30 via the conveyor 24. The tray loader 30 may include machinery that receives a certain amount of the cooled material for packaging. By way of example, the tray loader 30 may receive 25 ounces of the cooled material, which may correspond to an amount of cereal provided in a cereal box.

A tray wrapper 32 may receive a collected amount of cooled material from the tray loader 30 into a bag, which may be sealed. The tray wrapper 32 may receive the collected amount of cooled material in a bag and seal the bag using appropriate machinery. The conveyor 24 may transport the bagged material to case packer 34, which may package the bagged material into a box. The boxes may be transported to a palletizer 36, which may stack a certain number of boxes on a pallet that may be lifted using a forklift or the like. The stacked boxes may then be transported to a shrink wrapper 38, which may wrap the stacked boxes with shrink-wrap to keep the stacked boxes together while on the pallet. The shrink-wrapped boxes may then be transported to storage or the like via a forklift or other suitable transport vehicle.

To perform the operations of each of the devices in the example industrial automation system 10, the industrial automation devices 20 may provide power to the machinery used to perform certain tasks, provide protection to the machinery from electrical surges, prevent injuries from occurring with human operators in the industrial automation system 10, monitor the operations of the respective device, communicate data regarding the respective device to a supervisory control system 40, and the like. In some embodiments, each industrial automation device 20 or a group of industrial automation devices 20 may be controlled using a local control system 42. The local control system 42 may include receive data regarding the operation of the respective industrial automation device 20, other industrial automation devices 20, user inputs, and other suitable inputs to control the operations of the respective industrial automation device(s) 20.

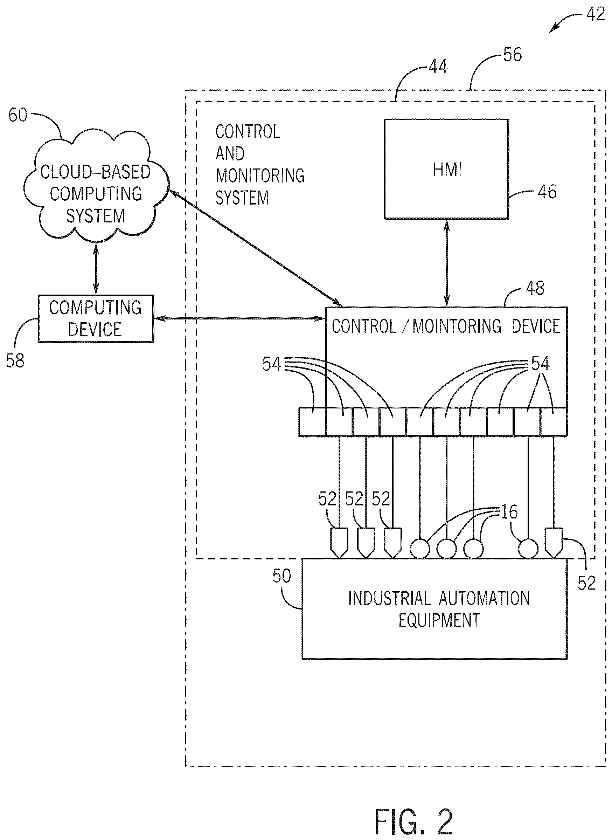

By way of example, FIG. 2 illustrates a diagrammatical representation of an exemplary local control system 42 that may be employed in any suitable industrial automation system 10, in accordance with embodiments presented herein. In FIG. 2, the local control system 42 is illustrated as including a human machine interface (HMI) 46 and a control/monitoring device 48 or automation controller adapted to interface with devices that may monitor and control various types of industrial automation equipment 50. By way of example, the industrial automation equipment 50 may include the mixer 18, the depositor 22, the conveyor 24, the oven 26, other pieces of machinery described in FIG. 1, or any other suitable equipment.

It should be noted that the HMI 46 and the control/monitoring device 48, in accordance with embodiments of the present techniques, may be facilitated by the use of certain network strategies. Indeed, any suitable industry standard network or network may be employed, such as DeviceNet, to enable data transfer. Such networks permit the exchange of data in accordance with a predefined protocol and may provide power for operation of networked elements.

As discussed above, the industrial automation equipment 50 may take many forms and include devices for accomplishing many different and varied purposes. For example, the industrial automation equipment 50 may include machinery used to perform various operations in a compressor station, an oil refinery, a batch operation for making food items, a mechanized assembly line, and so forth. Accordingly, the industrial automation equipment 50 may comprise a variety of operational components, such as electric motors, valves, actuators, temperature elements, pressure sensors, or a myriad of machinery or devices used for manufacturing, processing, material handling, and other applications.

Additionally, the industrial automation equipment 50 may include various types of equipment that may be used to perform the various operations that may be part of an industrial application. For instance, the industrial automation equipment 50 may include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation equipment 50 may be made up of certain automation devices 20, which may include controllers, input/output (I/O) modules, motor control centers, motors, human machine interfaces (HMIs), operator interfaces, contactors, starters, sensors 16, actuators, drives, relays, protection devices, switchgear, compressors, firewall, network switches (e.g., Ethernet switches, modular-managed, fixed-managed, service-router, industrial, unmanaged, etc.), and the like.

In certain embodiments, one or more properties of the industrial automation equipment 50 may be monitored and controlled by certain equipment for regulating control variables used to operate the industrial automation equipment 50. For example, the sensors 16 may monitor various properties of the industrial automation equipment 50 and may provide data to the local control system 42, which may adjust operations of the industrial automation equipment 50, respectively. For example, the local control system 42, the control/monitoring device 48, or another suitable control system, may actuate one or more actuators 52.

In some cases, the industrial automation equipment 50 may be associated with devices used by other equipment. For instance, scanners, gauges, valves, flow meters, and the like may be disposed on industrial automation equipment 50. Here, the industrial automation equipment 50 may receive data from the associated devices and use the data to perform their respective operations more efficiently. For example, a controller (e.g., control/monitoring device 48) of a motor drive may receive data regarding a temperature of a connected motor and may adjust operations of the motor drive based on the data.

In certain embodiments, the industrial automation equipment 50 may include a communication component that enables the industrial equipment 50 to communicate data between each other and other devices. The communication component may include a network interface that may enable the industrial automation equipment 50 to communicate via various protocols such as Ethernet/IP^{®}, ControlNet^{®}, DeviceNet^{®}, or any other industrial communication network protocol. Alternatively, the communication component may enable the industrial automation equipment 50 to communicate via various wired or wireless communication protocols, such as Wi-Fi, mobile telecommunications technology (e.g., 2G, 3G, 4G, 5G, LTE), Bluetooth^{®}, near-field communications technology, and the like.

The sensors 16 may be any number of devices adapted to provide information regarding process conditions. The actuators 52 may include any number of devices adapted to perform a mechanical action in response to a signal from a controller (e.g., the control/monitoring device 48). The sensors 16 and actuators 52 may be utilized to operate the industrial automation equipment 50. Indeed, they may be utilized within process loops that are monitored and controlled by the control/monitoring device 48 and/or the HMI 46. Such a process loop may be activated based on process input data (e.g., input from a sensor 16) or direct operator input received through the HMI 46. As illustrated, the sensors 16 and actuators 52 are in communication with the control/monitoring device 48. Further, the sensors 16 and actuators 52 may be assigned a particular address in the control/monitoring device 48 and receive power from the control/monitoring device 48 or attached modules.

Input/output (I/O) modules 54 may be added or removed from the control and monitoring system 44 (e.g., control/monitoring system 44) via expansion slots, bays or other suitable mechanisms. In certain embodiments, the I/O modules 54 may be included to add functionality to the control/monitoring device 48, or to accommodate additional process features. For instance, the I/O modules 54 may communicate with new sensors 16 or actuators 52 added to monitor and control the industrial automation equipment 50. It should be noted that the I/O modules 54 may communicate directly to sensors 16 or actuators 52 through hardwired connections or may communicate through wired or wireless sensor networks, such as Hart or IOLink.

Generally, the I/O modules 54 serve as an electrical interface to the control/monitoring device 48 and may be located proximate or remote from the control/monitoring device 48, including remote network interfaces to associated systems. In such embodiments, data may be communicated with remote modules over a common communication link, or network, wherein modules on the network communicate via a standard communications protocol. Many industrial controllers can communicate via network technologies such as Ethernet (e.g., IEEE702.3, TCP/IP, UDP, Ethernet/IP, and so forth), ControlNet, DeviceNet or other network protocols (Foundation Fieldbus (H 1 and Fast Ethernet) Modbus TCP, Profibus) and also communicate to higher level computing systems.

In the illustrated embodiment, several of the I/O modules 54 may transfer input and output signals between the control/monitoring device 48 and the industrial automation equipment 50. As illustrated, the sensors 16 and actuators 52 may communicate with the control/monitoring device 48 via one or more of the I/O modules 54 coupled to the control/monitoring device 48.

In certain embodiments, the control/monitoring system 44 (e.g., the HMI 46, the control/monitoring device 48, the sensors 16, the actuators 52, the I/O modules 54) and the industrial automation equipment 50 may make up an industrial automation application 56. The industrial automation application 56 may involve any type of industrial process or system used to manufacture, produce, process, or package various types of items. For example, the industrial applications 56 may include industries such as material handling, packaging industries, manufacturing, processing, batch processing, the example industrial automation system 10 of FIG. 1, and the like.

The control/monitoring device 48 may be communicatively coupled to a computing device 58 and a cloud-based computing system 60. In this network, input and output signals generated from the control/monitoring device 48 may be communicated between the computing device 58 and the cloud-based computing system 60. Although the control/monitoring device 48 may be capable of communicating with the computing device 58 and the cloud-based computing system 60, as mentioned above, in certain embodiments, the control/monitoring device 48 (e.g., local control system 42) may perform certain operations and analysis without sending data to the computing device 58 or the cloud-based computing system 60.

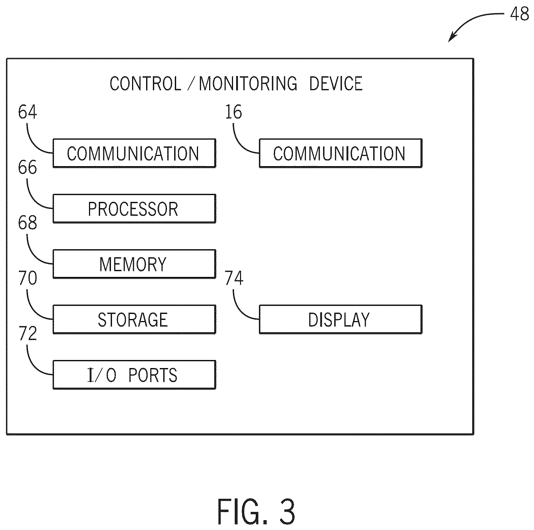

FIG. 3 illustrates example components that may be part of the control/monitoring device 48 or any other suitable computing device that implement embodiments presented herein. For example, the control/monitoring device 48 may include a communication component 64 (e.g., communication circuitry), a processor 66, a memory 68, a storage 70, input/output (I/O) ports 72, a sensor 16 (e.g., an electronic data sensor, a temperature sensor, a vibration sensor, a camera), a display 74, and the like. The communication component 64 may be a wireless or wired communication component that may facilitate communication between the control/monitoring device 48, the local control system 42, and other communication capable devices.

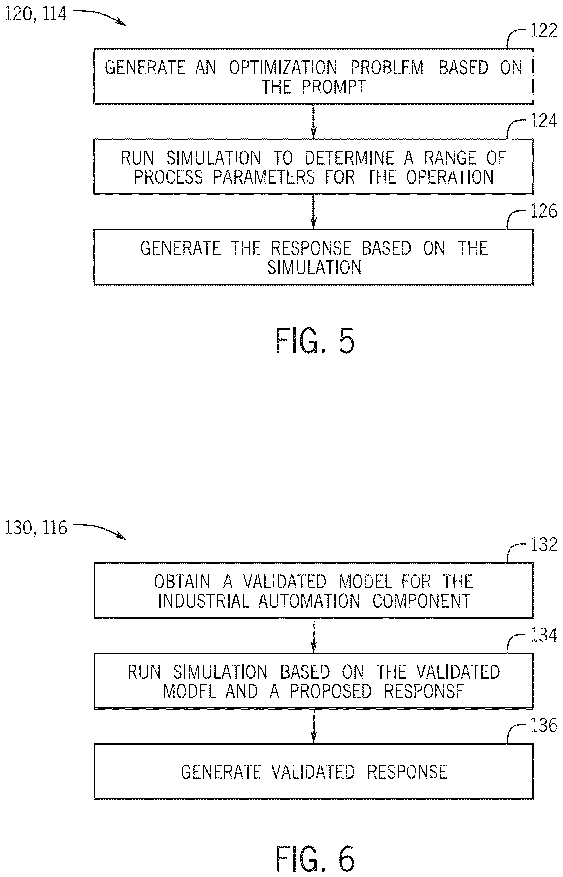

The processor 66 may be any type of computer processor or microprocessor capable of executing computer-executable code. The processor 66 may also include multiple processors that may perform the operations described below. The memory 68 and the storage 70 may be any suitable articles of manufacture that can serve as media to store processor-executable code, data, or the like. These articles of manufacture may represent computer-readable media (e.g., any suitable form of memory or storage) that may store the processor-executable code used by the processor 66 to perform the presently disclosed techniques. Generally, the processor 66 may execute software applications that include identifying anomalies in sensor data measured by the sensor 16, identifying a frequency corresponding to a change in the sensor data, determining a reduced set of sensor data, and generating constraints used to validate the sensor data, as discussed in more detail with respect to FIG. 6.

The memory 68 and the storage 70 may also be used to store the data, analysis of the data, the software applications, and the like. For example, the memory 68 and the storage 70 may store instructions associated with implementing different levels of processing for various operations. As another non-limiting example, the memory 68 and the storage 70 may store one or more previously acquired sensor data (e.g., by the sensor 16) or streamed sensor data. As another non-limiting example, the memory 68 and the storage 70 may store a constraint that represents a relationship between sensor data acquired by the sensor 16 and streamed sensor data from one or more additional sensors. The memory 68 and the storage 70 may represent non-transitory computer-readable media (e.g., any suitable form of memory or storage) that may store the processor-executable code used by the processor 66 to perform various techniques described herein. It should be noted that non-transitory merely indicates that the media is tangible and not a signal.

The I/O ports 72 may be interfaces that may couple to other peripheral components such as input devices (e.g., keyboard, mouse), sensors, input/output (I/O) modules, and the like. The I/O modules may enable the control/monitoring device 48 to communicate with the computing device 58, the control/monitoring device 48, the industrial automation equipment 50, or other devices in the industrial automation system via the I/O modules.

The display 74 may depict visualizations associated with software or executable code being processed by the processor 66. In one embodiment, the display 74 may be a touch display capable of receiving inputs (e.g., parameter data for operating the industrial automation equipment 50) from a user of the control/monitoring device 48, such as an indication indicating that the motion profile of an industrial automation equipment 50. As such, the display 74 may serve as a user interface to communicate with control/monitoring device 48. The display 74 may display a graphical user interface (GUI) for operating the control/monitoring device 48, for tracking the maintenance of the industrial automation equipment 50, and the like. The display 74 may be any suitable type of display, such as a liquid crystal display (LCD), plasma display, or an organic light emitting diode (OLED) display, for example. Additionally, in one embodiment, the display 74 may be provided in conjunction with a touch-sensitive mechanism (e.g., a touch screen) that may function as part of a control interface for the control/monitoring device 48 or for a number of pieces of industrial automation equipment in the industrial automation application 56, to control the general operations of the industrial automation application 56.

Although the components described above have been discussed with regard to the control/monitoring device 48 and the local control system 42, it should be noted that similar components may make up other computing devices described herein. Further, it should be noted that the listed components are provided as example components and the embodiments described herein are not to be limited to the components described with reference to FIG. 3. For example, the control/monitoring device 48 and the local control system 42 may include the communication component 64, the processor 66, the memory 68, the storage 70, the I/O ports 72, and the display 74. However, in general, the processor 66 of the control/monitoring device 48 may be capable of processing relatively more data than the processor 66 of the control/monitoring device 48. For example, the processor 66 of the control/monitoring device 48 may be capable of batch processing, while the processor 66 of the control/monitoring device 48 may be capable of processing streamed sensor data.

Keeping the foregoing in mind, in some embodiments, the memory 68 and/or storage 70 of the computing device 58 may include a software application that may be executed by the processor 66 and may be used to monitor, control, access, or view one of the industrial automation equipment 50. As such, the computing device 58 may communicatively couple to industrial automation equipment 50 or to a respective computing device of the industrial automation equipment 50 via a direct connection between the devices or via the cloud-based computing system 60. The software application may perform various functionalities, such as track statistics of the industrial automation equipment 50, store reasons for placing the industrial automation equipment 50 offline, determine reasons for placing the industrial automation equipment 50 offline, secure industrial automation equipment 50 that is offline, deny access to place an offline industrial automation equipment 50 back online until certain conditions are met, and so forth.

As another non-limiting example, and referring back to FIG. 2, in operation, the industrial automation application 56 may receive one or more process inputs to produce one or more process outputs. For example, the process inputs may include feedstock, electrical energy, fuel, parts, assemblies, sub-assemblies, operational parameters (e.g., sensor measurements), or any combination thereof. Additionally, the process outputs may include finished products, semi-finished products, assemblies, manufacturing products, by products, or any combination thereof.

To produce the processed outputs, the control/monitoring device 48 may output control signals to instruct industrial automation equipment 50 to perform one or more control actions. For example, the control/monitoring device 48 may instruct a motor (e.g., an automation device 20) to implement a control action to cause the motor to operate at a particular operating speed (e.g., a manipulated variable set point).

In some embodiments, the control/monitoring device 48 may determine the manipulated variable set points based at least in part on process data. As described above, the process data may be indicative of operation of the industrial automation device 20, the industrial automation equipment 50, the industrial automation application 56, and the like. As such, the process data may include operational parameters of the industrial automation device 20 and/or operational parameters of the industrial automation application 56. For example, the operational parameters may include any suitable type of measurement or control setting related to operating respective equipment, such as temperature, flow rate, electrical power, and the like.

Thus, the control/monitoring device 48 may receive process data from one or more of the industrial automation devices 20, the sensors 16, or the like. In some embodiments, the control/monitoring device 48 may determine an operational parameter (e.g., process parameter) and communicate a measurement signal indicating the operational parameter to the control/monitoring device 48. For example, a temperature sensor may measure a temperature of a motor (e.g., an automation device 20) and transmit a measurement signal indicating the measured temperature to the control/monitoring device 48. The control/monitoring device 48 may then analyze process data associated with the operation of the motor to monitor performance of an associated industrial automation application 56 (e.g., determine an expected operational state) and/or perform diagnostics on the industrial automation application 56 based on the measured temperature.

To facilitate controlling operation and/or performing other functions, the control/monitoring device 48 may include one or more controllers, such as one or more model predictive control (MPC) controllers, one or more proportional-integral-derivative (PID) controllers, one or more neural network controllers, one or more fuzzy logic controllers, and other suitable controllers.

In some embodiments, the supervisory control system 40 may provide centralized control over operation of the industrial automation application 56. For example, the supervisory control system 40 may enable centralized communication with a user (e.g., operator). To facilitate, the supervisory control system 40 may include the display 74 to provide information to the user. For example, the display 74 may present visual representations of information, such as process data, selected features, expected operational parameters, and/or relationships there between. Additionally, the supervisory control system 40 may include similar components as the control/monitoring device 48 described above in FIG. 3.

On the other hand, the control/monitoring device 48 may provide localized control over a portion of the industrial automation application 56. For example, in the depicted embodiment of FIG. 1, the local control system 42 that may be part of the mixer 18 may include the control/monitoring device 48, which may provide control over operation of a first automation device 20 that controls the mixer 18, while a second local control system 42 may provide control over operation of a second automation device 20 that controls the operation of the depositor 22.

In some embodiments, the local control system 42 may control operation of a portion of the industrial automation application 56 based at least in part on the control strategy determined by the supervisory control system 40. Additionally, the supervisory control system 40 may determine the control strategy based at least in part on process data determined by the local control system 42. Thus, to implement the control strategy, the supervisory control system 40 and the local control systems 42 may be communicatively coupled via a network, which may be any suitable type, such as an Ethernet/IP network, a ControlNet network, a DeviceNet network, a Data Highway Plus network, a Remote I/O network, a Foundation Fieldbus network, a Serial, DH-485 network, a SynchLink network, or any combination thereof.

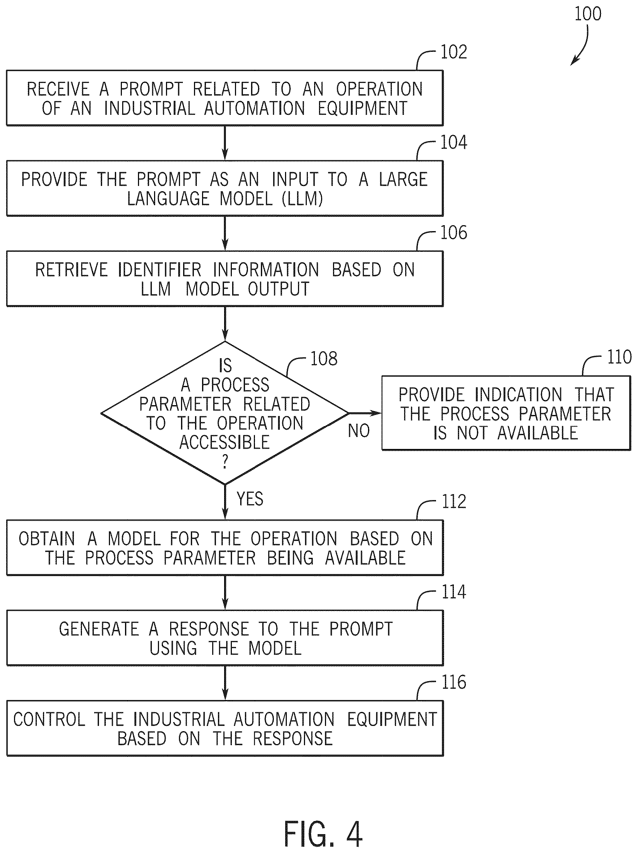

As discussed herein, a user may desire to interact with an LLM to acquire information about and/or control the operation of one or more industrial automation equipment 50. For example, the user may access the supervisory control system 40, the local control systems 42, the control/monitoring device 48, or other suitable computing device and provide a prompt to an LLM requesting that the industrial automation equipment 50 operates in accordance with an operating condition. To illustrate this, FIG. 4 shows a flow diagram of a process 100 for controlling industrial automation equipment 50 using a prompt. While the process 100 is described below as being performed by the processor 66 of the control/monitoring device 48, it should be noted that any suitable computing device may be capable of performing the process 100. In some embodiments, the process 100 may be performed by an LLM operating in conjunction with one or more software entities, such as a digital twin generating agent that builds a digital twin or other model, or an AI agent that queries a database based on a prompt generated by the LLM.

At block 102, the processor 66 receives a prompt related to an operation of one or more industrial automation equipment 50. In general, the prompt may include words or phrases (e.g., in a spoken language), provided as a command or request for information related to the operation of the industrial automation equipment 50 of the industrial automation system 10 or other system. For example, the prompt may include a first word or phrase that indicates a particular equipment or machine, such as "the oven". In some embodiments, the prompt may include a second word or phrase that may identify a particular line or group of industrial automation equipment 50 that includes the industrial automation component 50 indicated by the first word or phrase. It should be noted that any combination of the words may aid the processor 66 in identifying the particular industrial automation equipment 50 intended to be referred to by the prompt. The prompt may also include includes one or more words that indicate the operation, such as a desired operating condition for the industrial automation equipment 50 to reach, an undesirable condition to be avoided, or a general request for information for the industrial automation equipment 50. As described in more detail below, the LLM may parse the prompt to identify the words or phrases that indicate the industrial automation equipment 50 and the operation.

In some embodiments, the processor 66 may extract metadata based on the prompt that may provide context information for the industrial automation equipment 50. For example, the processor 66 may identify a MAC address, an IP address, or other information that facilitates identifying the user or a location that user is working, which may be used to identify the one or more industrial automation equipment 50 indicated in the prompt.

At block 104, the processor 66 provides the prompt as an input to an LLM, and the LLM provides an output that is identifier information, a search query for retrieving the identifier information from a database, or otherwise information used to retrieve the identifier information. The LLM is capable of parsing the prompt to identify words (e.g., keywords) that identify particular industrial automation equipment 50 and obtaining identifier information associated with the industrial automation equipment 50. The identifier information may include equipment type information that indicates a type, model, or version of the industrial automation equipment 50. In some embodiments, the identifier information may include sensor information, such as process parameters capable of being measured for the industrial automation equipment 50, a number and/or type of each sensor 16 configured to measure the process parameters for the industrial automation equipment 50. In some embodiments, the identifier information includes layout information, such as a relationship (e.g., a physical relationship, a hierarchical relationship) between the industrial automation equipment 50 and other industrial automation equipment of the industrial automation system 10, what industrial automation equipment 50 are grouped or coupled. In some embodiments, the identifier information may include product information, such as one or more products produced using the industrial automation equipment 50, and. The LLM may be trained using identifier information for the industrial automation system 10 that includes the industrial automation equipment 50 or otherwise an organization or factory where the industrial automation equipment 50 is utilized. Doing so may prevent the LLM from providing inaccurate outputs, such as hallucinations, since the LLM utilizes information specific to the industrial automation equipment 50 that may be relevant to the prompt, rather than a generic industrial automation equipment that is not associated with the industrial automation system 10.

To obtain the identifier information, the processor 66, may query a database or other suitable storage component to determine whether the database includes identifier information for the industrial automation equipment 50 indicated by the prompt. The database may store a list, table, or other format of identifier information for various industrial automation equipment 50. For example, the LLM may output a search query to the database for the processor 66 to use to retrieve information associated with the industrial information for the industrial automation equipment 50 indicated in the prompt. The database may include identifier information for each of the mixer 18, the depositor 22, the conveyor 24, the oven 26, other pieces of machinery described in FIG. 1, or any other suitable equipment. If the processor 66 determines that the database does not include the identifier information, the processor 66 may output a notification using the display 74, or other suitable display, that informs a user that the database does not include the information. This may indicate that the user submitted incorrect information in the prompt or that the database may not be up to date. In some embodiments, the processor 66 may inform the user to review the prompt and/or resubmit the prompt. This may aid the user to ensure the database stores up to date information. However, if the processor 66 determines that the database includes the identifier information for the industrial automation equipment 50 indicated by the prompt, the processor 66 may proceed to block 106 and retrieve the identifier information from the database or other storage component.

At block 108, the processor 66 determines whether a process parameter related to the operation is available or otherwise known based on the identifier information. To do so, the processor 66 may determine whether any of the identifier information may be used to provide an indication of the operation or is correlated with the operation. For example, in an embodiment where the operation corresponds to an operating condition, the processor 66 may retrieve identifier information that indicates sensor measurements that are available for the industrial automation equipment 50. Then, the processor 66 may determine whether any of the sensor measurements could provide an indication of the operating condition. In some embodiments, the processor 66 may identify mathematical relationships between the operating condition, or other operation as described herein, and process parameters capable of being measured by the sensors 16, which indicate how a sensor measurement may indicate the operating condition. As one specific non-limiting example, the operating condition is a burned product produced by the oven 26. The processor 66 may determine that there is a temperature sensor or power usage sensor for the oven 26 that may provide an indication of whether a product produced by the oven 26 is burned or not. As such, the processor 66 may cause the display 74 to play or otherwise provide a notification indicating that the process parameter related to the operation is available. For example, the notification may indicate the particular sensor 16 to measure the process parameter. In some embodiments, the notification may provide inputs to a user to select to indicate whether the particular sensor 16 is suitable to monitor the operation (e.g., operating condition). If the processor 66 determines the sensor 16 is suitable for monitoring the operation, the processor 66 may tag, track, or highlight the measurements by the sensor 16, such as by creating a real-time visualization that indicate the measurements.

However, if the processor 66 determines that process parameters related to the operation are not accessible or that a sensor measurement is not available, then the processor 66, at block 110, provides an indication that the process parameter is not available. For example, the processor 66 may output a visualization or otherwise output an indication that the process parameter is not available. In some embodiments, the processor 66 may output an indication that suggests that a user should add a particular type of senor 16 to measure the process parameter, that the user check a database to ensure the information is accurate (e.g., the database may not indicate that the sensor capable of measuring the process parameter is present, when it is available). In some embodiments, the processor 66 may output an indication that the user check or utilize a general purpose LLM for a general answer or indicate that the user validates the operation indicated by the prompt. The general purpose LLM may be an LLM not trained using the information of the factory that includes the industrial automation equipment 50.

However, if the processor 66 determines that the process parameter is accessible or is otherwise available, the processor 66 may, at block 112, obtain a model that is capable of utilizing the process parameter. To obtain the model, the processor 66 may determine whether a digital twin or other model for the industrial automation equipment is available. If the digital twin or other model is available, the processor 66 may proceed to block 114.

At block 114, the processor 66 generates a response to the prompt using the model. To generate the response, the processor 66 may iteratively vary the process parameter and determine whether the operation occurs or otherwise results, such as a desired operating condition or an undesired operating condition. Accordingly, the processor 66 may generate a response that indicates an acceptable operating range for the process parameter, or other process parameters. The response is generally words or phrases in the spoken language in a format that would be understandable by the user. For example, the response may say "do not reduce the speed of the conveyor A below 10 meters per second."

If the digital twin or other model is not available, then the processor 66 may still, ultimately, proceed to block 114, however the processor 66 will generate a digital twin used to generate the response. To generate the digital twin, the processor 66 may utilize the identifier information to provide context for the digital twin such that it may accurately represent the industrial automation equipment 50. For example, the processor 66 may utilize the identifier information to determine the range of process parameters (e.g., temperature of the oven 26, speed of the conveyors 24, and so on) that the industrial automation equipment 50 operates. Further, the processor 66 may determine what additional industrial automation equipment 50 receive an output of and/or provide an input to the industrial automation equipment 50 (e.g., indicated in the prompt). In this way, the processor 66 may generate a digital twin that may more accurately represent the operating conditions of the industrial automation equipment 50.

In some embodiments, the processor 66 may generate a model to provide a response within a degree of accuracy. For example, the processor 66 may receive an input from a user or identify data stored in the memory 68 that indicates the threshold accuracy or precision for the model. As such, the processor 66 may generate a model such that its accuracy does not exceed the threshold accuracy. In this way, the processor 66 may utilize the computational resources sufficient to generate the model within the threshold accuracy, as compared to making a more complex model with higher accuracy or precision. As such, the processor 66 may have computational resources available for performing other tasks.

At block 116, the processor 66 controls the operation of the industrial automation equipment 50 based on the response. For example, if the response indicates a range of process parameters to avoid an undesirable operating condition, the processor 66, or a control system, may control operation of the industrial automation equipment 50 such that the process parameters are within the range. Accordingly, the processor 66 may prevent the industrial automation equipment 50 from operating in the undesirable operating condition.

To ensure that the processor 66 provides an output that further prevents an undesirable outcome (e.g., operating at an incorrect operating condition), the processor 66 may validate the response by running a simulation that indicates the resulting operation of the industrial automation equipment 50 if it were to implement the response. To illustrate this, FIG. 5 shows a flow diagram of a process 120 that may be used to validate the response. The processor 66 may perform block 114 of FIG. 4 by performing the process 120. Although the process 120 is described as being performed by the processor 66, it should be noted that any suitable processor or control system (e.g., having one or more processors) may perform the process 120.

At block 122, the processor 66 generates an optimization problem based on the prompt. To do so, the processor 66 may generate an objective (e.g., to avoid or reach an operating condition), parameters (e.g., one or more process parameters that may indicate the operating condition), and constraints (e.g., a range of process parameters that correspond to operating conditions for the industrial automation equipment 50).

At block 124, the processor 66 runs a simulation to determine a range of process parameters for the operation. The processor 66 may iterate through the optimization problem, penalizing outputs that deviate from the objective. That is, the processor 66 may determine a range of the process parameters that result in a desired operating condition, avoid an undesirable operating condition, and the like. In some embodiments, the processor 66 may determine an operating setpoint for the industrial automation equipment such that the process parameters are not at the maximum or minimum of the range or otherwise may potentially operate outside of the range.

At block 126, the processor 66 generates the response based on the simulation. The response may be a written response in a spoken language that indicates the operating setpoint and/or the range of process parameters. Accordingly, the process 120 may be utilized by the processor 66 to simulate a potential response before the instructions indicated by the response are executed. In this way, the process 120 may decrease the likelihood that the processor 66 provides a response that causes an undesirable or unexpected outcome.

To ensure that the processor 66 provides an output that further prevents an undesirable outcome (e.g., operating at an incorrect operating condition), the processor 66 may validate the response using a validated model. To illustrate this, FIG. 6 shows a flow diagram of a process 130 that may be used to validate the response. The processor 66 may perform block 116 of FIG. 4 by performing the process 130.

At block 132, the processor 66 obtains a validated model for the industrial automation equipment 50. To do so, the processor 66 may apply the response to the validated model, such as a digital twin, to determine whether the response sufficiently answers the prompt. That is, when the prompt is related to avoiding an undesirable operating condition, the processor 66 may determine whether the industrial automation equipment 50, operating in accordance with the range of process parameters and/or the operating setpoint, will avoid the undesirable operating condition.

At block 134, the processor 66 runs a simulation based on the validated model and a proposed response. The proposed response may be the response generated by the processor 66 at block 114. To run the simulation, the processor 66 may utilize the available process parameters indicating the operating condition. Then, the processor 66 may apply a recommendation indicated by the proposed response and run the simulation one or more times based on the recommendation. During each run of the simulation, the processor 66 may compare the process parameters to respective ranges of the process parameters to determine whether the process parameters are outside of the range (e.g., indicating that the industrial automation equipment 50 is operating at an undesired operating condition or is deviating from the desired operating condition). In this way, the processor 66 may verify whether or not the proposed response is accurate. In some instances, the processor 66 may introduce perturbations to the simulation, thereby establishing robustness for the response.

At block 136, the processor 66 generates a validated response based on the simulation using the validated model. In some embodiments, the validated response may be a modification of the proposed response. For example, the processor 66 may determine the proposed response may cause the industrial automation equipment 50 to operate in an anomalous manner or otherwise in an undesired way. Accordingly, the processor 66 may modify the proposed response, such as by adjusting the range of process parameters indicated in the proposed response, suggesting additional sensor measurements that may improve the accuracy of determining whether the operating condition is reached, and so on. In some embodiments, the validate response may be the proposed response. For example, after running the simulation, the processor 66 may determine that the proposed response may cause the industrial automation equipment 50 to operate within a threshold range of a target condition or otherwise in a desirable way. As such, generating the validated response may include the processor 66 outputting the proposed response in response to the processor 66 determine that the proposed response will cause the industrial automation equipment 50 to operate in a desirable way.

Accordingly, the process 130 may be utilized by the processor 66 to simulate a potential response before the instructions indicated by the response are executed. In this way, the process 130 may decrease the likelihood that the processor 66 provides a response that causes an undesirable or unexpected outcome.

One specific non-limiting example of the disclosed techniques is described below. A user may provide a prompt "how can I prevent the overheating of the boiler B01 in the Line Line01" to a computing device. The computing device may utilize the LLM that parses the prompt to identify the keywords "overheating" (e.g., the operation), "boiler B01" (e.g., the industrial automation equipment), and "Line Line01" (e.g., contextual information that identifies a particular industrial automation equipment 50. Then, the LLM may output a search query that the computing device utilizes to retrieve identifier information for the boiler B01, such as a boiler type, process measurements available for B01, or any units or equipment connected to the boiler B01.

Then, the computing device parses the identifier information to determine whether process parameters that can indicate the operation are available. If the computing device determines that the process parameters are available, the computing device may retrieve a digital twin for the boiler B01. Additionally, the computing device may test accessibility of the data indicating the process parameters to confirm whether or not the data is sufficient (e.g., there is enough data to provide a threshold precision) for use by the digital twin. In some instances, a user may be able to provide input to confirm or reject the data. In any case, the LLM may generate a response by implementing an optimization problem. The optimization problem may be a mathematical formulation that penalizes deviation of the process parameter from a range or interval based on inputs (e.g., one or more process parameters that are available), which are subject to the dynamics defined by the digital twin. Then, the LLM may apply the response to the model, to determine whether an anticipated outcome of the model (e.g., using the response), matches the output of the model. If the outputs match, then the computing device may determine that the response is validated and the computing device may provide the response as an output.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A system comprising:
a computing system configured to:
receive a prompt related to an operation of an industrial automation equipment;
provide the prompt as an input to a Large Language Model (LLM) that stores information related to the industrial automation equipment;
retrieve identifier information corresponding to the industrial automation equipment as an output of the LLM;
determine that a process parameter related to the operation of the industrial automation equipment is accessible by the computing system based on the identifier information;
obtain a model for the operation of the industrial automation equipment based on the process parameter being accessible;
generate a response to the prompt based on the model; and
control the industrial automation equipment based on the response.

2. The system of claim 1, wherein the computing system is configured to generate the response to the prompt based on the model by:
generating an optimization problem based on the prompt;
running a simulation, using the model, to determine whether a current operating condition of a modeled industrial automation equipment will be within a threshold range, wherein the modeled industrial automation equipment corresponds to the industrial automation equipment; and
generating the response based on the current operating condition of the modeled industrial automation equipment being within the threshold range.

3. The system of claim 1 or 2, wherein the computing system is configured to control the industrial automation equipment based on the response by:
obtaining a validated model for the industrial automation equipment based on the response;
running a simulation based on the validated model and the response;
generating a validated response based on the simulation; and
controlling the industrial automation equipment based on the validated response.

4. The system of one of claims 1 to 3, wherein the model for the operation of the industrial automation equipment comprises a digital twin of the industrial automation equipment.

5. The system of one of claims 1 to 4, wherein the computing system is configured to determine that the process parameter related to the operation of the industrial automation equipment is accessible by the computing system based on the identifier information by identifying a sensor is present that is configured to measure the process parameter of the industrial automation equipment.

6. The system of one of claims 1 to 5, at least one of:
wherein the LLM is configured to parse the prompt for a plurality of keywords, wherein the plurality of keywords comprises a first keyword indicating the operation, a second keyword indicating the industrial automation equipment, and a third keyword comprising context information associated with the industrial automation equipment;
wherein the LLM is configured to output the identifier information corresponding to the industrial automation equipment by querying a database storing a list of industrial automation equipment that includes the industrial automation equipment;
wherein the identifier information comprises a plurality of process parameters that are measurable for the industrial automation equipment, wherein the plurality of process parameters comprises the process parameter related to the operation of the industrial automation equipment;
wherein the identifier information indicates one or more additional industrial automation equipment operating in conjunction with the industrial automation equipment to perform the operation; and
wherein the prompt comprises a command to adjust the operation of the industrial automation equipment.

7. A method, comprising:
receiving, via one or more processors, a prompt related to an operation of an industrial automation equipment;
providing, via the one or more processors, the prompt as an input to a Large Language Model (LLM) that stores information related to the industrial automation equipment;
retrieving, via the one or more processors, identifier information corresponding to the industrial automation equipment as an output of the LLM;
determining, via the one or more processors, that a process parameter related to the operation of the industrial automation equipment based on the identifier information;
obtaining, via the one or more processors, a model for the operation of the industrial automation equipment based on the process parameter being accessible;
generating, via the one or more processors, a response to the prompt based on the model; and
controlling, via the one or more processors, the industrial automation equipment based on the response.

8. The method of claim 7, wherein the operation of the industrial automation equipment indicates an operating condition for the industrial automation equipment.

9. The method of claim 8, wherein the prompt comprises a query to avoid or reach the operating condition.

10. The method of one of claims 7 to 9, wherein the response indicates a range for the process parameter, and wherein controlling the industrial automation equipment based on the response comprises operating the industrial automation equipment such that the process parameters are within the range.

11. The method of one of claims 7 to 10, at least one of:
wherein the prompt and the response are written in a spoken language; and
wherein the identifier information comprises a layout of one or more additional industrial automation equipment, and wherein obtaining the model comprises generating the model based on the layout of the one or more additional industrial automation equipment relative to the industrial automation equipment of the prompt.

12. The method of one of claims 7 to 11, further comprising generating a real-time visualization of the process parameter to display on a display device.

13. A non-transitory computer-readable medium comprising computer-executable instructions that, when executed, are configured to cause a processing system to perform operations comprising:
receiving, via one or more processors, a prompt related to an operation of an industrial automation equipment;
providing, via the one or more processors, the prompt as an input to a Large Language Model (LLM) that stores information related to the industrial automation equipment;
retrieving, via the one or more processors, identifier information corresponding to the industrial automation equipment as an output of the LLM;
determining, via the one or more processors, that a process parameter related to the operation of the industrial automation equipment based on the identifier information;
obtaining, via the one or more processors, a model for the operation of the industrial automation equipment based on the process parameter being accessible;
generating, via the one or more processors, a response to the prompt based on the model; and
controlling, via the one or more processors, the industrial automation equipment based on the response.

14. The non-transitory computer-readable medium of claim 13, wherein obtaining the model comprises:
determining whether data related to the process parameter is sufficient for modeling the operation of the industrial automation equipment; and
generating the model based on the data related to the process parameters being sufficient.

15. The non-transitory computer-readable medium of claim 13 or 14, further comprising generating a real-time visualization of the process parameter to display on a display device.
